Europäisches Patentamt

European Patent Office

Office européen des brevets

(19)

(11) **EP 1 024 254 B1**

(12) **EUROPÄISCHE PATENTSCHRIFT**

(45) Veröffentlichungstag und Bekanntmachung des Hinweises auf die Patenterteilung:
**04.05.2005 Patentblatt 2005/18**

(51) Int Cl.⁷: **F01N 3/20**, F01N 3/36, F01N 9/00

(21) Anmeldenummer: **99120452.0**

(22) Anmeldetag: **14.10.1999**

(54) **Verfahren und Vorrichtung zur Steuerung eines Abgasnachbehandlungssystems**

Method and apparatus for controlling an exhaust gas after-treatment system

Procédé et dispositif de commande d' un système de post-traitement des gaz d'échappement

(84) Benannte Vertragsstaaten:
**DE FR GB IT SE**

(30) Priorität: **29.01.1999 DE 19903439**

(43) Veröffentlichungstag der Anmeldung:
**02.08.2000 Patentblatt 2000/31**

(73) Patentinhaber: **ROBERT BOSCH GMBH**
**70442 Stuttgart (DE)**

(72) Erfinder:
• **Weyer, Klaus**
**70178 Stuttgart (DE)**

• **Mahr, Bernd, Dr.**
**73207 Plochingen (DE)**
• **Hupfeld, Bernd, Dr.**
**38518 Gifhorn (DE)**
• **Unger, Stefan**
**70197 Stuttgart (DE)**

(56) Entgegenhaltungen:
EP-A- 0 498 598     EP-A- 0 621 400
EP-A- 0 708 230     EP-A- 0 822 323
EP-A- 0 828 063

**Beschreibung**

Stand der Technik

Die Erfindung betrifft ein Verfahren zur Steuerung eines Abgasnachbehandlungssystems.

Ein solches System ist beispielsweise in der EP-A 621 400 beschrieben, bei dem einer Brennkraftmaschine derart Kraftstoff zugemessen wird, dass ein Teil des Kraftstoffs unverbrannt über die Abgasleitungen in einen Katalysator gelangt und dort mit Stickoxiden (NOx) reagiert.

Ferner sind Katalysatorsysteme bekannt, bei denen zwischen der Brennkraftmaschine und dem Katalysator ein Reduktionsmittel zugeführt wird. Häufig wird als Reduktionsmittel Ammoniak verwendet. Dabei wird eine Harnstoff-Wasser-Lösung zugemessen, die in einem vor dem eigentlichen Katalysator angeordneten Hydrolyse-Katalysator in Ammoniak umgesetzt wird. Im Katalysator werden dann die Stickoxide mit dem Ammoniak zu Stickstoff reduziert.

Die Dosierung des Reduktionsmittels ist aufwendig, da eine Vielzahl von Temperatursensoren benötigt wird. Ferner ist die Dosierung im dynamischen Betrieb der Brennkraftmaschine, d. h. beim Beschleunigen und beim Verzögern, entsprechend aufwendig. Weiterhin ist es problematisch, dass bei einer Überdosierung der Harnstoff-Wasser-Lösung ein Ammoniak-Durchbruch auftreten kann. Ein geschlossener Regelkreis mittels eines Ammoniaksensors wäre sehr aufwendig.

Aus der EP-A 822 323 ist eine Vorrichtung zum Reinigen des Abgases einer Brennkraftmaschine bekannt geworden, bei der eine Reagenzmittelmenge für eine Reaktion in einem NOx-Katalysator in Abhängigkeit von der Raumgeschwindigkeit des Abgases im Katalysator festgelegt wird. Eine Korrektur der auf diese Weise erhaltenen Grundmenge des Reduktionsmittels erfolgt durch die Temperaturdifferenz, die zwischen dem NOx-Katalysator und dem Abgas vor dem NOx-Katalysator gemessen wird.

Der Erfindung liegt die Aufgabe zugrunde, bei einem Verfahren zur Steuerung eines Abgasnachbehandlungssystems eine Dosierung eines Reduktionsmittels möglichst genau vorzunehmen, um die NOx-Emissionen zu verringern.

Vorteile der Erfindung

Mittels des erfindungsgemäßen Verfahrens ist eine genaue Festlegung einer Reduktionsmittelmenge für einen Katalysator möglich. Dadurch können NOx-Emissionen sowohl im stationären als auch im instationären Betrieb der Brennkraftmaschine minimiert werden. Ein Reduktionsmittel-Durchbruch kann vermieden werden. Ferner kann die Applikation eines Steuergeräts wesentlich vereinfacht werden. Besonders vorteilhaft ist es, dass nur eine geringe Anzahl von Sensoren benötigt wird. Vorteilhafte und zweckmäßige Ausgestaltungen und Weiterbildungen der Erfindung sind in den Unteransprüchen gekennzeichnet.

Zeichnung

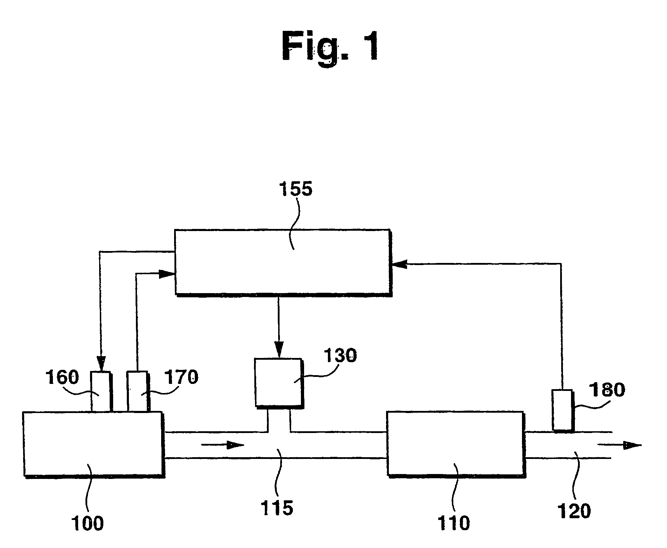

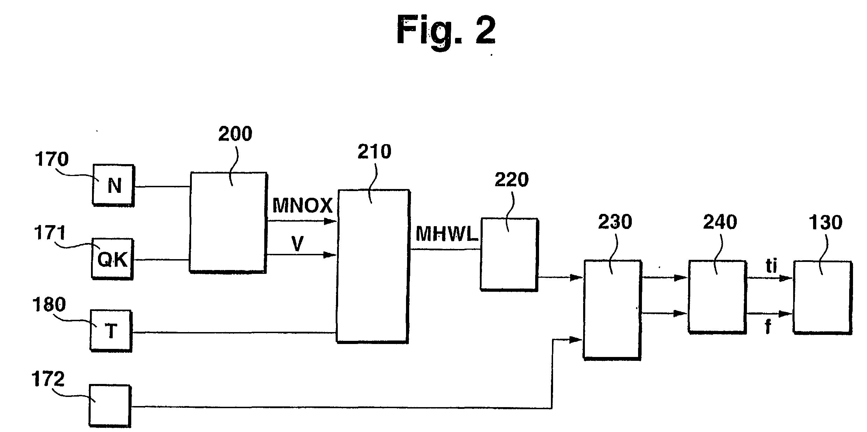

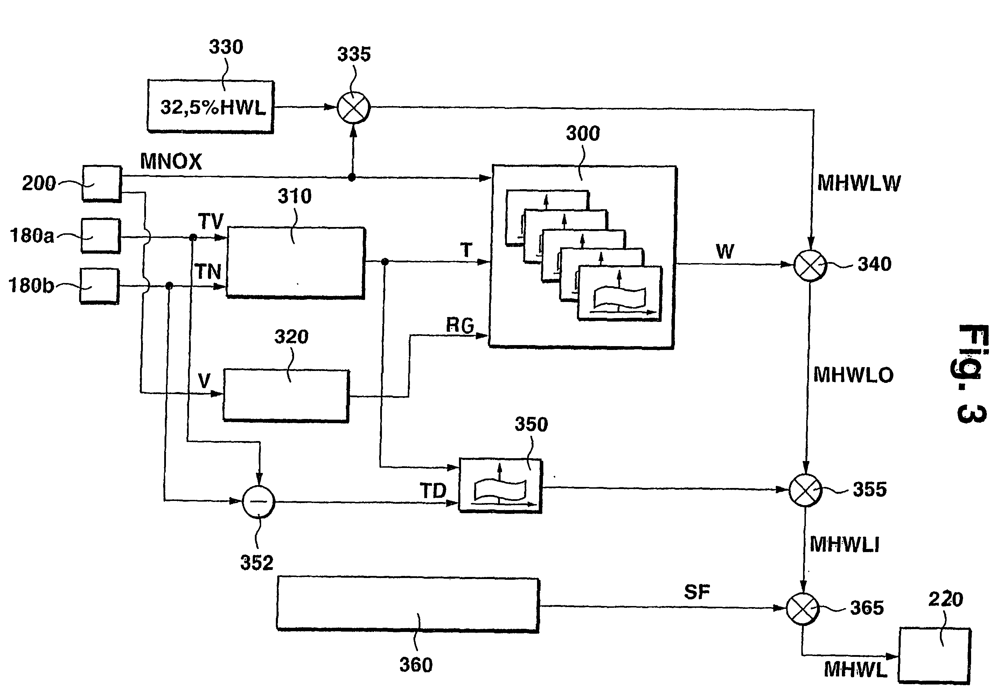

Die Erfindung wird nachstehend anhand der in der Zeichnung dargestellten Ausführungsformen erläutert. Es zeigen die Figur 1 ein Übersichtsblockdiagramm einer Vorrichtung zur Steuerung einer Brennkraftmaschine, Figur 2 ein Blockdiagramm einer Vorrichtung zur Steuerung der Reduktionsmittelzufuhr, Figur 3 ein Blockdiagramm eines Teiles der Figur 2 und die Figuren 4, 5 und 6 jeweils ein Flußdiagramm der erfindungsgemäßen Vorgehensweise.

In Figur 1 ist eine Brennkraftmaschine 100 dargestellt. Diese ist über eine Abgasleitung 115 mit einem Katalysator 110 verbunden. Von dem Katalysator 110 gelangt das Abgas über eine Auspuffleitung 120 in die Umgebung. In der Abgasleitung 115 ist eine Dosiereinheit 130 angeordnet. Ferner sind wenigstens Sensoren 170 an der Brennkraftmaschine und Sensoren 180 in der Auspuffleitung 120 angeordnet.

Desweiteren können Steller 160 vorgesehen sein, die die Brennkraftmaschine steuern. Die Ausgangssignale der Sensoren gelangen zu einer Steuereinheit 155, die sowohl die Dosiereinheit 130 als auch den Steller 160 mit Ansteuersignalen beaufschlagt.

Bei der in Figur 1 dargestellten Ausführungsform ist lediglich eine Steuereinheit 155 vorgesehen, die sowohl die Brennkraftmaschine als auch das Abgasnachbehandlungssystem, insbesondere die Dosiereinheit 130, steuert. Es kann aber auch vorgesehen sein, daß wenigstens zwei getrennte Steuereinheiten vorgesehen sind, wobei eine Steuereinheit das Abgasnachbehandlungssystem steuert. Die Steuereinheit zur Steuerung der Brennkraftmaschine überträgt verschiedene Größen über Datenleitungen an Steuereinheit zur Steuerung des Abgasnachbehandlungssystems.

Die Steuereinheit 155 berechnet ausgehend von verschiedenen Signalen, die von den Sensoren 170, 180 und weiteren nicht dargestellten Sensoren erfaßt werden, die Ansteuersignale, mit denen die Steller 130, 160 und/oder weitere nicht dargestellte Steller beaufschlagt werden. Mittels der Steller 160 wird die Brennkraftmaschine gesteuert. Hierbei kann es beispielsweise vorgesehen sein, daß der Steller 160, die in die Brennkraftmaschine einzuspritzende Kraftstoffmenge und/oder den Beginn der Einspritzung beeinflußt.

Die Steuereinheit 155 berechnet ferner abhängig von verschiedenen Betriebskenngrößen des Gesamtsystems die Menge an Reduktionsmittel, die nötig ist, um das bei der Verbrennung in der Brennkraftmaschine auftretende Stickstoffoxid (NOX) in dem Katalysator 110 zu reduzieren. Dadurch kann die Menge an NOX, die über die Auspuffleitung 120 an die Umgebung abgegeben wird, deutlich reduziert werden.

Im Abgas einer Brennkraftmaschine befindet sich der Katalysator 110. Vor dem Katalysator wird mittels der Dosiereinheit 130 ein Reduktionsmittel betriebspunktabhängig zudosiert. Die zudosierte Reduktionsmittelmenge wird von der Dosiereinheit 130 so vorgegeben, daß sich für jeden Betriebszustand minimierte NOX-Emmissionen ergeben wobei gleichzeitig ein Ammoniakdurchbruch vermieden wird.

Erfindungsgemäß wird vor dem Katalysator ein Reduktionsmittel zugeführt wird. Ausgehend von einer Lastgröße QK und wenigstens einer ersten weiteren Betriebskenngröße wird eine Größe vorgegeben, die die Menge an zugeführten Reduktionsmittel bestimmt. Bei der ersten weiteren Betriebskenngröße handelt es sich vorzugsweise um die Drehzahl. Bei der Lastgröße QK handelt es sich vorzugsweise um ein Kraftstoffmengensignal. Als Kraftstoffmengensignal kann beispielsweise eine interne Größe in der Steuereinheit 155 verwendet werden, die ausgehend von der das Ansteuersignal für den Steller 160 bestimmt wird. Ferner kann als Lastgröße QK eine Größe verwendet werden, die dem Moment der Brennkraftmaschine entspricht. Im Folgenden wird die Lastgröße als Kraftstoffmengensignal QK bezeichnet.

Die Größe, die die Menge an zugeführten Reduktionsmittel bestimmt, ist abhängig von wenigstens einer weiteren zweiten Betriebskenngröße korrigierbar. Dabei wird ausgehend von dem Kraftstoffmengensignal und der ersten weiteren Größe, bei der es sich vorzugsweise um die Drehzahl der Brennkraftmaschine handelt, eine Grundmenge an zugeführtem Reduktionsmittel vorgegeben. Diese Grundmenge wird anschließend abhängig von verschiedenen Größen korrigiert.

In der Figur 2 ist der Teil der Steuereinheit 155 detaillierter dargestellt, der das Abgasnachbehandlungssystem steuert. Dieser Teil stellt insbesondere das Ansteuersignal zur Beaufschlagung der Dosiereinheit 130 bereit. Ein Motorblock 200 ist mit einem Sensor 170, weiteren nicht dargestellten Sensoren und anderen Komponenten 171 der Steuereinheit 155 verbunden. Diese Sensoren liefern verschiedene Signale bezüglich des Betriebszustands der Brennkraftmaschine, wie beispielsweise der Drehzahl N der Brennkraftmaschine, der Kühlwassertemperatur, dem Ladedruck, der Lufttemperatur und/oder der Luftfeuchtigkeit. Die anderen Komponenten 171 liefern die Lastgröße QK, das insbesondere die in die Brennkraftmaschine eingespritzte Kraftstoffmenge kennzeichnet. Als Lastgröße können alle Signale verwendet werden, die die einzuspritzende Kraftstoffmenge charakterisieren. Hierbei wird vorzugsweise eine intern in der Steuereinheit 155 vorliegende Größe verwendet. Beispielsweise wird das Ansteuersignal für den Steller 160 als Kraftstoffmenge QK und oder eine Momentensignal verwendet.

Der Motorblock 200 liefert verschiedene Signale MNOX, und/oder V an einen Katblock 210. Ferner werden dem Katblock 210 Ausgangssignale verschiedener Sensoren 180 zugeleitet, die beispielsweise ein oder mehrere Signale T bezüglich der Abgastemperatur beinhalten.

Der Katblock 210 gibt ein Signal MHWL an einen Korrekturblock 220. Der Korrekturblock 220 beaufschlagt einen Dosierblock 230 mit einem korrigierten Signal.

Dem Dosierblock 230 wird ferner das oder die Ausgangssignale eines Sensors 172 zugeleitet. Der Dosierblock 230 setzt diese Signale in ein Ansteuersignal für die Dosiereinheit 130 um. Dieses Ansteuersignal ist im wesentlichen definiert durch seine Ansteuerdauer ti und seine Frequenz f. Diese beiden Größen werden von einer Überwachung 240 überprüft und an die Dosiereinheit 130 weitergeleitet.

Im Motorblock 200 wird ausgehend von verschiedenen Betriebskenngrößen der Brennkraftmaschine die Größe MNOX und die Größe V berechnet. Die Größe MNOX charakterisiert den aktuellen Maßenstrom an Stickoxiden und die Größe V charakterisiert eine Größe, die dem Abgasvolumenstrom entspricht. Diese Größe V entspricht dem in einer Zeiteinheit durch den Katalysator strömenden Abgasvolumen. Die Größe MNOX charakterisiert den zu reduzierenden Massenstrom an zu reduzierenden Stoffen.

Die Berechnung dieser Größen MNOX und V erfolgt vorzugsweise mittels eines Kennfeldes. Neben der Drehzahl N und der Lastgröße QK können noch weitere Größen, die das Verhalten der Brennkraftmaschine charakterisieren, berücksichtigt werden. Dies sind insbesondere Temperatur und Druckwerte, die die Umgebungsluft und/oder der der Brennkraftmaschine zugeführten Luft charakterisieren.

Ausgehend von der Kraftstoffmenge und der Drehzahl der Brennkraftmaschine wird das Signal MNOX, das den Massenstrom an zu reduzierenden Stoffen, insbesondere an Stickoxiden NOX, charakterisiert, bestimmt und/oder von der Motorsteuerung übernommen.

Der Katblock 210 berechnet die Größe MHWL, die der benötigten Menge an Reduktionsmittel entspricht, ausgehend von dem aktuellen Maßenstrom MNOX an Stickoxiden NOX, dem Abgasvolumenstrom V und/oder wenigstens einem mit dem Temperatursensor 180 erfaßten Temperatursignal T. Der Katblock 210 bestimmt den Wirkungsgrad W des Katalysators 110 in Abhängigkeit des aktuellen Betriebszustandes der Brennkraftmaschine und/oder des Katalysators. Ausgehend von dem Wirkungsgrad W des Katalysators und dem Massenstrom von Stickoxid, der dem Signal MNOX entspricht, wird der erforderliche Massenstrom MHWL an Reduktionsmitteln bestimmt. Der Katblock ist in Figur 3 detaillierter dargestellt.

Der Korrekturblock 220 berücksichtigt verschiedene Einflüsse auf das Gesamtsystem, bestehend aus Brennkraftmaschine, Einspritzsystem und Katalysator. Insbesondere wird die Alterung des Gesamtsystems berücksichtigt.

Hierzu ist beispielsweise vorgesehen, daß eine Größe ermittelt wird, die die Laufzeit des Systems und/oder des Abgasnachbehandlungssystems charakterisiert. Beispielsweise kann der Verbrauch an Reduktionsmittel als entsprechende Größe verwendet werden. Ausgehend von dieser Größe wird ein Korrekturwert bestimmt, der die Alterung des Systems berücksichtigt. Dabei ist der Korrekturwert derart gewählt, daß er die Änderung, insbesondere die Abnahme, des Wirkungsgrades des Systems kompensiert. Bei einer Abnahme des Wirkungsgrades des Systems ergibt sich ein Korrekturwert, der eine Reduzierung der Reduktionsmittelmenge zur Folge hat. Erfindungsgemäß erfolgt eine Korrektur abhängig von einer Größe, die die Laufzeit und/oder die Alterung des Systems und/oder der Brennkraftmaschine berücksichtigt.

Ausgehend von dem erforderlichen Massenstrom an die Reduktionsmittel MHWL berechnet der Dosierblock 230 unter Verwendung weiterer Betriebskenngrößen, die mittels des Sensors 172 erfaßt werden, Signale zur Ansteuerung der Dosiereinheit 130. In dem dargestellten Ausführungsbeispiel wird die Dosiereinheit 130 mit einem getakteten Signal beaufschlagt. Die Frequenz f und/oder die Periodendauer ti des Signals bestimmt die zugemessene Menge an Reduktionsmittel.

Die sich an den Dosierblock 230 anschließende Überwachung 240 überprüft die beiden Größen ti und f dahingehend, ob alle Kriterien für eine Einspritzung von Reduktionsmitteln erfüllt sind. Vorzugsweise ist vorgesehen, daß ein sogenannter Signal Range Check durchgeführt wird. Hierzu wird überprüft, ob die beiden Signale ti und/oder f größer als ein unterer Schwellwert und/oder kleiner als ein oberer Schwellwert sind. Ferner kann vorgesehen sein, daß überprüft wird, ob Betriebszustände vorliegen, in denen ein Zudosierung von Reduktionsmittel möglich ist. So kann beispielsweise mittels eines Temperatursensor die Temperatur des Katalysators erfaßt werden. Eine Zudosierung erfolgt nur, wenn die Temperatur größer als ein Schwellwert ist. Besonders vorteilhaft ist es, wenn ein Sensor vorgesehen ist, der ein Signal abgibt, der die Menge an Reduktionsmittel anzeigt, die sich noch im Vorratsbehälter für das Reduktionsmittel befindet.

In Figur 3 ist der Katblock 210 detaillierter dargestellt. Bereits in Figur 1 und 2 beschriebene Elemente sind mit entsprechenden Bezugszeichen bezeichnet. Ein wesentlicher Bestandteil des Katblockes 210 sind verschiedene Kennfelder 300, die von einer Temperaturberechnung 310 mit wenigstens einem Temperatursignal T, von einer Raumgeschwindigkeitsberechnung 320 mit einem Signal RG und von dem Motorblock 200 mit dem Signal MNOX beaufschlagt werden.

Am Ausgang der Kennfelder 300 liegt ein Signal W, daß den Wirkungsgrad des Katalysators kennzeichnet, an. Von dem Motorblock 200 wird der Raumgeschwindigkeitsberechnung 320 ein Signal V, daß den Volumenstrom im Abgas charakterisiert, zugeführt.

Die Temperaturberechnung 310 verarbeitet ein Ausgangssignal TV eines Temperatursensors 180a, der vor dem Katalysator 110 in der Abgasleitung 115 angeordnet ist, und ein Ausgangssignal TN eines Temperatursensors 180b, der nach dem Katalysator 110 in der Auspuffleitung 120 angeordnet ist.

Das Signal MNOX gelangt ferner zu einem Verknüpfungspunkt 335, in dem es in dem Ausgangssignal eines Vorgabeblockes 330 verknüpft wird. Das Ausgangssignal MHWLW des Verknüpfungspunktes 335 gelangt zu einem zweiten Verknüpfungspunkt 340, wo es mit dem Ausgangssignale W der Kennfelder 300 verknüpft wird. Das Ausgangssignal MHWLS des Verknüpfungspunktes 340 gelangt zu dem Eingang eines Verknüpfungspunktes 355 an dessen zweiten Eingang das Ausgangssignal einer Instationärkorrektur 350 anliegt. Der Instationärkorrektur 350 wird zum einen das Ausgangssignal T der Temperaturberechnung 310 und die Differenz der beiden Eingangssignale TV und TN der Temperaturberechnung 310 über den Verknüpfungspunkt 352 als Signal TD zugeleitet. Das Ausgangssignal MHWLI des Verknüpfungspunktes 355 gelangt zu einem Verknüpfungspunkt 365, wo es mit dem Ausgangssignal SF einer Abstandskorrektur 360 verknüpft wird. Am Ausgang des Verknüpfungspunktes 365 liegt das Signal MHWL an, daß dem Korrekturblock 220 zugeleitet wird.

Im Verknüpfungspunkt 335 wird der Stickoxydmassenstrom MNOX mittels eines konstanten Faktors in einen Wunschmassenstrom MHWLW an Reduktionsmittel umgerechnet. Dabei gilt die Beziehung:

$$MHWLW = MNOX * K$$

Dabei sind die Massenströme in Gramm pro Stunde angegeben. Bei der Größe K handelt es sich um eine Konstante, die beispielsweise bei einer 32,5%igen Harnstoffwasserlösung einen Wert von nahezu 2 annimmt. Bei unterschiedlich konzentrierten Harnstoffwasserlösungen oder anderen Reduktionsmitteln muß für die Konstante K ein entsprechender Wert gewählt werden. Der Wert für die Konstante K ist in der Vorgabe 330 abgelegt.

Der Wunschmassenstrom MHWLW für das Reduktionsmittel würde zugemessen, falls der Katalysator 110 in der Lage wäre das gesamte Stickoxyd unter Umsetzung des gesamten Reduktionsmittels zu Stickstoff zu reduzieren. Da der Umsetzungsgrad von verschiedenen Betriebskenngrößen abhängig ist, wird in dem Kennfeld 300 der gesamte Wirkungsgrad W des Systems bestehend aus Katalysators 110 und Einspritzsystem 130 abgelegt. Vorzugsweise handelt es sich bei dem Kennfeld 300 um ein vierdimensionales Kennfeld bzw. um mehrere dreidimensionale Kennfelder. Der Wirkungsgrad in dem Kennfeld 300 ist abhängig von dem Stickoxydmassenstrom MNOX, der charakteristischen Katalysatortemperatur T sowie der Raumgeschwindigkeit RG des Abgases abgelegt. Ausgehend von wenigstens dem Signal MNOX, das die Menge an zu reduzierenden Stoffen charakterisiert, und/oder der charakteristischen Katalysatortemperatur T wird das Signal w bestimmt, das den Systemwirkungsgrad charakterisiert.

Die Raumgeschwindigkeit RG wird ausgehend von dem Abgasvolumenstrom V, der von dem Motorblock 210 ermittelt wird, und einer Konstanten, die im wesentlichen durch das Volumen des Katalysators bestimmt ist, von der Raumgeschwindigkeitsberechnung 320 vorgegeben. Anstelle der Raumgeschwindigkeit kann auch unmittelbar, der Abgasvolumenstrom V als Eingangsgröße verwendet werden.

Ausgehend von der ersten Abgastemperatur TV, die die Temperatur in der Abgasleitung vor dem Katalysator repräsentiert, und der zweiten Abgastemperatur TN, die die Temperatur nach dem Katalysator in der Auspuffleitung repräsentiert, wird die charakteristische Katalysatortemperatur bestimmt.

Bei der charakteristischen Katalysatortemperatur T handelt es sich um eine fiktive Temperatur, die ausgehend von der Temperatur TV vor dem Katalysator und der Temperatur TN nach dem Katalysator von der Temperaturberechnung 310 ermittelt wird. Dieser Temperaturwert spiegelt sowohl im stationären als auch im instationären Motorbetrieb das reale Verhalten des Katalysators in Abhängigkeit von der Temperatur wieder.

Vorzugsweise ist vorgesehen, daß eine arithmetische Mittelwertbildung und/oder eine anschließende Wichtung mit einem konstanten- oder einem betriebskenngrößenabhängigen Wert durchgeführt wird. Vorzugsweise ist vorgesehen, daß die Wichtung abhängig von dem Volumenstrom V erfolgt. Besonders vorteilhaft ist, wenn der zeitliche Verlauf verschiedener Betriebskenngrößen in die Wichtung eingeht. So kann vorgesehen sein, daß die Wichtung abhängig von der zeitlichen Änderung der Lastgröße erfolgt.

Des weiteren kann vorgesehen sein, daß der Wert T abhängig von den Größen TV und TN und gegebenenfalls den weiteren Betriebskenngrößen in entsprechenden Kennfeldern abgelegt ist.

Alternativ zu der Größe MNOX, die den Stickoxydmassenstrom charakterisiert, kann auch die Stickoxydkonzentration als Eingangsgröße verwendet werden.

Im Verknüpfungspunkt 340 wird ausgehend von dem Wunschmassenstrom MHWLW und dem Wirkungsgrad W die Grundmenge MHWL0 an Reduktionsmittel bestimmt. Im Verknüpfungspunkt 340 werden die beiden Größen vorzugsweise multipliziert. Dies bedeutet ausgehend von der Wunschmenge an Reduktionsmittel und dem Signal W, das den Systemwirkungsgrad charakterisiert, wird der Grundwert MHWL0 an Reduktionsmittel bestimmt.

Das Kennfeld 300 gibt den Wirkungsgrad W sowohl für den stationären als auch für den instationären Motorbetrieb an. Treten im instationären Betrieb große Temperaturdifferenzen zwischen dem Eingang des Katalysators und dem Ausgang des Katalysators auf, kommt ein zusätzlicher Korrekturfaktor zur Anwendung. Dieser Korrekturfaktor wird von der Instationärkorrektur 350 bereitgestellt. Dies bedeutet, daß ausgehend von der ersten Abgastemperatur TV und der zweiten Abgastemperatur TN eine Korrekturgröße SF vorgegeben wird. Dieser Faktor ist so bemessen, daß er eine Überdosierung im instationären Motorbetrieb vermeidet. Mit der Größe SF, die von der Abstandsberechnung 360 vorgegeben wird, wird die Menge an Reduktionsmitteln noch einmal um ein weiteres Mal reduziert, damit soll sichergestellt werden, daß kein Ammoniakdurchbruch auftritt. Dieser Wert SF berücksichtigt Toleranzen des Systems. Er wird derart vorgegebenen, daß auch bei maximaler Toleranz kein Ammoniakdurchbruch auftritt.

Vorteilhaft bei dieser Ausführungsform ist es, daß durch die Verwendung von zwei Temperatursensoren, die vor und nach dem Katalysator 110 angeordnet sind, die effektiv wirksame Katalysatortemperatur T sehr genau berechnet werden kann. Da der Wirkungsgrad W Umsetzung von Stickoxyd wesentlich durch das Verhalten des Katalysators und dort insbesondere durch die effektiv wirksame Katalysatortemperatur bestimmt wird, ist eine sehr genaue Dosierung von Reduktionsmitteln möglich. Je genauer die das Umsetzungsverhalten charakterisierende effektiv wirksame Katalysatortemperatur T bestimmt wird, desto kleiner kann der Sicherheitsabstand SF zugunsten eines großen Wirkungsgrades für die Umsetzung von Stickoxyd ohne Ammoniakdurchbruch gewählt werden.

Besonders vorteilhaft ist ferner, daß die Steuereinheit 155 in funktionale Blöcke, die im wesentlichen einen Motorblock, einen Katblock und den Dosierblock umfassen, aufgeteilt ist. Dadurch kann der Aufwand bei der Applikation, beispielsweise bei Änderungen an einer der Komponenten Motor, Katalysator oder Dosiereinheit 130 deutlich vermindert werden. Dadurch können insbesondere bei kleinen Stückzahlen von Steuergeräten Kosten bei der Entwicklung und der Applikation deutlich verringert werden.

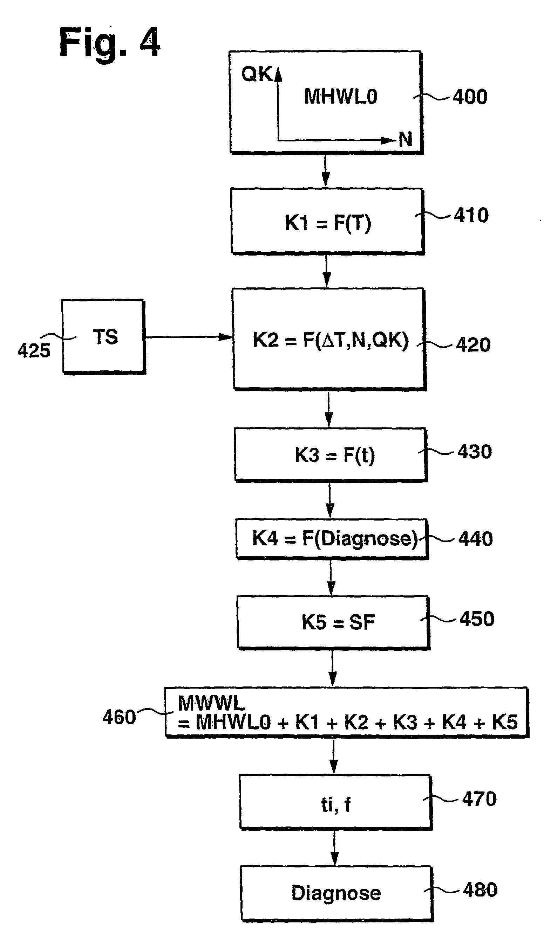

Eine weitere Ausführungsform zur Bestimmung der Ansteuersignale für die Dosiereinheit 130 ist in Figur 4 als Flußdiagramm dargestellt. In einem Schritt 400 wird ausgehend von Betriebskenngrößen eine Grundmenge MHWL0 des Reduktionsmittels aus einem Kennfeld ausgelesen. Vorzugsweise wird die Grundmenge MHWL0 an Reduktionsmitteln abhängig von der Lastgröße QK und der Drehzahl N der Brennkraftmaschine vorgegeben.

Im sich anschließenden Schritt 410 erfolgt eine Korrektur der Grundmenge MHWL0 an Reduktionsmittel abhängig vom aktuellen Betriebszustand der Brennkraftmaschine. In dieser Korrektur werden weitere Betriebskenngrößen berücksichtigt, die nicht in das Kennfeld des Schrittes 400 eingehen. Dies sind insbesondere die Luftfeuchtigkeit, verschiedene Temperaturwerte, die die Temperatur und/oder Druckwert der Umgebungsluft bzw. der der Brennkraftmaschine zugeführten Luft kennzeichnen und/oder ein Temperaturwert, der die Temperatur der Brennkraftmaschine kennzeichnet. Hierzu wird ein erster Korrekturwert K1 abhängig von einer Betriebskenngröße ermittelt. Hierdurch kann insbesondere eine Korrektur der Reduktionsmittelmenge beim Start erfolgen.

Bei einem Lastsprung ändert sich die Stickoxydemmission zeitverzögert und erreicht erst verspätet den neuen stationären Wert. Steigt die eingespritzte Kraftstoffmenge plötzlich um einen sehr großen Wert auf einen neuen Wert an, so steigt die Stickoxydemmission erst nach einer gewissen Verzögerungszeit auf einen neuen Wert an, der der erhöhten Kraftstoffmenge entspricht. Ferner ändert sich der Wirkungsgrad der Umsetzung von Stickoxid ebenfalls nur zeitverzögert. Die aus dem Kennfeld im Schritt 400 ausgelesene Reduktionsmittelmenge MHWL, die für den neuen stationären Betriebszustand gilt, nimmt daher kurzzeitig einen falschen an, das heißt bei einem Anstieg der Kraftstoffmenge nimmt die Reduktionsmittelmenge einen zu hohen und bei einem Abfall der Kraftstoffmenge einen zu niederen Wert an.

Erfindungsgemäß wird die Reduktionsmittelmenge an dieses dynamische Verhalten der Stickoxidemmission und/oder des Wirkungsgrad der Umsetzung angepaßt. Dadurch wird der Effekt berücksichtigt, daß sich die Abgastemperatur und der Wirkungsgrad des Katalysators und/oder die Stickoxidemmission zeitverzögert ändert.

Diese Korrektur erfolgt im Schritt 420. In Schritt 420 wird ein zweiter Korrekturwert K2 ermittelt, der die Dynamik der Brennkraftmaschine und des Katalysatorsystems berücksichtigt. Das dynamische Verhalten wird mittels einer Temperaturdifferenz berücksichtigt. Bei dieser Temperaturdifferenz handelt es sich um die Abweichung zwischen einer gemessenen Temperatur und einem Sollwert TS der Abgastemperatur. Die Temperatur wird vorzugsweise nach dem Katalysator gemessen. Dieser Sollwert TS für die Abgastemperatur entspricht der Abgastemperatur im dynamischen Betrieb. Dieser Wert wird in Schritt 425 abhängig von verschiedenen Betriebskenngrößen wie beispielsweise der einzuspritzenden Kraftstoffmenge QK und der Drehzahl N der Brennkraftmaschine vorgegeben. Die tatsächliche Abgastemperatur wird mittels eines Temperatursensors im, nach und/oder vor dem Katalysator 110 gemessen.

Ausgehend von dieser Temperaturdifferenz $\Delta T$, der eingespritzten Kraftstoffmenge QK und/oder der Drehzahl N der Brennkraftmaschine wird in Schritt 420 der zweite Korrekturwert K2 vorgegeben. Hierzu wird vorzugsweise ein oder mehrere Kennfelder verwendet.

Der Wirkungsgrad W des Katalysators sowie die Emission von Stickoxyden des Motors hängt in hohem Maß von der Abgastemperatur ab. Erfindungsgemäß wird ausgehend von der Differenz zwischen der aktuellen Abgastemperatur, die mittels eines Sensors erfaßt wird, und den für den jeweiligen Betriebspunkt geltenden Temperaturwert TS, eine Anpassung der Reduktionsmittelmenge vorgenommen, d.h. ein Korrekturwert K2 bestimmt.

Im sich anschließenden Schritt 430 wird ein dritter Korrekturfaktor K3 bestimmt, der die Alterung des Katalysatorsystems über der Gesamtbetriebszeit des Systems berücksichtigt. Dadurch wird die Änderung des Wirkungsgrades, insbesondere die Verringerung des Wirkungsgrades, des Katalysators und/oder der Dosiereinheit 130 berücksichtigt. Dieser Schritt entspricht im wesentlichen dem Block 220 in Figur 2

Besonders vorteilhaft ist es, wenn in einem weiteren Schritt 440 eine Diagnosefunktion vorgesehen ist. Diese Diagnosefunktion erfordert einen Stickoxyd- und/oder einen Ammoniaksensor. Der Stickoxydsensor überwacht die Betriebsfähigkeit des Systems und stellt fest, ob eine Stickoxydumsetzung stattfindet. Wird beispielsweise eine zu geringe Konzentration von Reduktionsmitteln zugemischt, erhält man eine erhöhte Emission von Stickoxyden, die mittels des Stickoxydsensors erkannt wird. Dies kann beispielsweise der Fall sein, wenn der Vorratsbehälter für das Reduktionsmittel leer ist. Entsprechend kann mit einem Ammoniaksensor ein Ammoniakdurchbruch, das heißt eine zu hohe Konzentration von Reduktionsmittel, sicher erkannt werden. Ausgehend von dieser Diagnose wird ein vierter Korrekturfaktor K4 bestimmt. Bei einer vereinfachten Ausgestaltung kann dieser Schritt auch weggelassen werden. Dadurch kann die Anzahl der nötigen Sensoren reduziert werden.

Entsprechend wie in Block 360 der Figur 3 wird in Schritt 450 ein fünfter Korrekturfaktor K5 bestimmt, der dem Wert SF in Figur 3 entspricht.

Anschließend in Schritt 460 wird die Menge MHWL an Reduktionsmittel ausgehend von der in dem Kennfeld 400 abgelegten Grundmenge MHWL0 sowie den Korrekturfaktoren K1, K2, K3, K4 und K5 berechnet. Vorzugsweise werden die Größen addiert. Alternativ kann auch eine multiplikative Verknüpfung einzelner Größen oder eine gemischte Verknüpfung der Größen vorgesehen sein. Dies bedeutet, daß einzelne Korrekturgrößen additiv und andere multiplikativ wirken.

Im anschließenden Schritt 470 erfolgt entsprechend wie in Schritt 230 der Figur 2 eine Berechnung der Ansteuerzeit ti und der Ansteuerfrequenz f für die Dosiereinheit 130. In Schritt 480 erfolgt entsprechend wie in Schritt 240 die Diagnose des Systems.

Bei dieser Ausführungsform wird die notwendige Reduktionsmittelmenge MHWL direkt in einem Kennfeld abgelegt. In mehreren Kennfeldern für verschiedene positive und negative Temperaturunterschiede sind Korrekturwerte zur Korrektur der Reduktionsmittelmenge abgelegt. Dabei ist vorzugsweise vorgesehen, daß Kennfelder vorgesehen sind, in denen der Korrekturwert abhängig von der Drehzahl und der eingespritzten Kraftstoffmenge QK abgelegt ist. Für unterschiedliche Temperaturdifferenzen zwischen der Solltemperatur TS und der gemessenen Temperatur sind unterschiedliche Kennfelder vorgesehen. Zwischen diesen Kennfeldern wird dann interpoliert.

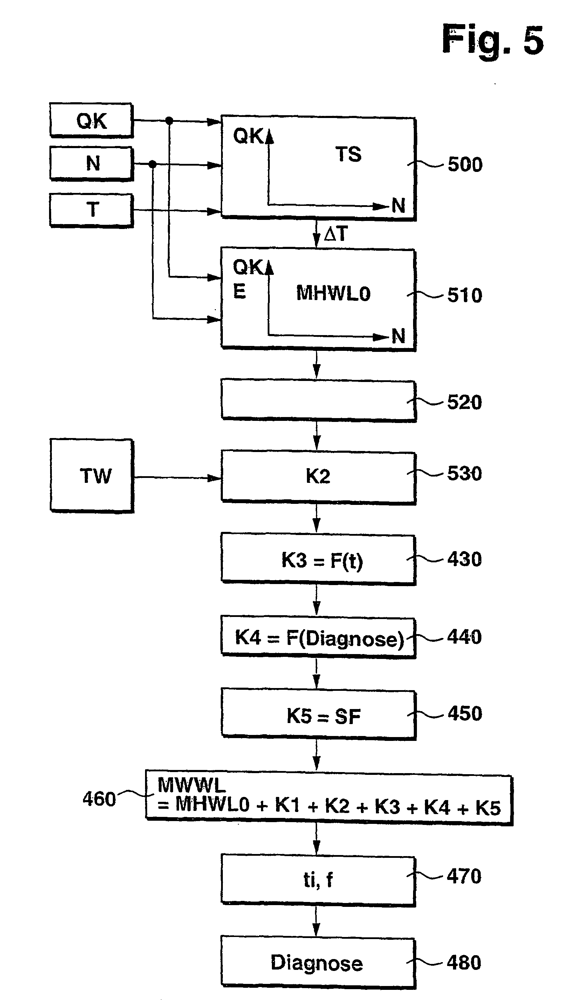

In Figur 5 ist eine weitere Ausführungsform dargestellt. In einem ersten Schritt 500 wird die Solltemperatur TS abhängig vom Betriebszustand der Brennkraftmaschine vorgegeben. Hierzu ist insbesondere vorgesehen, daß die Solltemperatur TS abhängig von der einzuspritzenden Kraftstoffmenge QK und der Drehzahl N der Brennkraftmaschine abgelegt ist. Erfindungsgemäß können auch noch weitere Betriebskenngrößen berücksichtigt werden.

Dies sind insbesondere die Luftfeuchtigkeit, verschiedene Temperaturwerte, die die Temperatur und/oder Druckwert der Umgebungsluft bzw. der der Brennkraftmaschine zugeführten Luft kennzeichnen und/oder ein Temperaturwert, der die Temperatur der Brennkraftmaschine kennzeichnet.

Hierzu werden im Schritt 500 die einzuspritzende Kraftstoffmenge QK und die Drehzahl N verarbeitet. Ausgehend von der Solltemperatur TS und einem gemessenen Temperaturwert T Temperatur des Katalysators wird dann eine Temperaturdifferenz $\Delta T$ bestimmt. Dieser Wert $\Delta T$ gibt die Abweichung der aktuellen Temperatur von der für diesen stationären Betriebszustand geltenden Temperatur an.

In einem nächsten Schritt 510 wird der Grundwert MHWL0 für die Reduktionsmittelmenge abhängig von der einzuspritzenden Kraftstoffmenge QK und der Drehzahl N aus verschiedenen Kennfeldern ausgelesen. Dabei ist vorgesehen, daß für unterschiedliche Temperaturdifferenzen AT unterschiedliche Kennfelder verwendet werden. Für Zwischenwerte der Temperaturdifferenz, für die keine Kennfelder abgelegt sind, werden im Schritt 520 die Werte für die Reduktionsmittelmenge MHWL0 mittels einer Interpolation bestimmt.

Anschließend in Schritt 530 wird ein zweiter Korrekturfaktor K2 bestimmt, der den Einfluß von weiteren Umgebungsbedingungen wie beispielsweise der Kühlwassertemperatur TW berücksichtigt. Anschließend werden weitere Korrekturgrößen K3, K4 und K5 entsprechend wie in Figur 4 beschrieben bestimmt. Erfindungsgemäß erfolgt eine Korrektur abhängig von einer Größe, die anzeigt daß ein Kaltstart vorliegt, berücksichtigt.

Bei der Ausführungsform gemäß den Figuren 4, 5 und 6 wird ausgehend von wenigstens der Lastgröße QK, der Drehzahl N der Brennkraftmaschine und/oder einem Temperatursignal, das durch die Abgastemperatur bestimmt wird, die Grundmenge MHWL0 an zugeführten Reduktionsmittel vorgegeben wird. Bei den Ausführungsformen gemäß den Figur 5 und 6 wird das Temperatursignal ausgehend von der eingespritzten Kraftstoffmenge, der Drehzahl der Brennkraftmaschine und der gemessenen Abgastemperatur vorgegeben. Dabei gibt das Temperatursignal die Abweichung der gemessenen Temperaturgröße von der Solltemperatur TS an. Die Solltemperatur wird auch als erwartete Temperaturgröße bezeichnet.

Ausgehend von dem Temperatursignal, das die Abweichung zwischen der gemessenen und der erwartete Temperatur charakterisiert, und wenigstens der eingespritzten Kraftstoffmenge wird die Grundmenge MHWL0 an zugeführtem Reduktionsmittel vorgegeben.

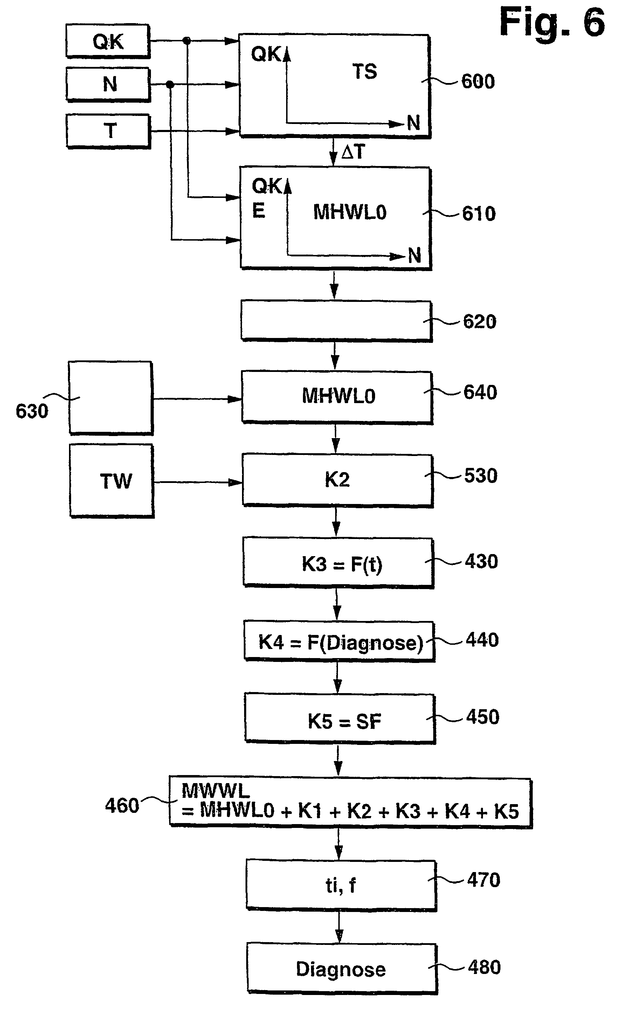

In Figur 6 ist eine weitere Ausführungsform dargestellt. Bei dieser Ausführungsform wird der Wirkungsgrad W des Katalysators ausgehend von verschiedenen Betriebskenngrößen vorgegeben und unter Verwendung des Wirkungsgrades W und der Menge MNOX an emittierten Stickoxyden die benötigte Reduktionsmittelmenge MHWL0 berechnet.

Der Wirkungsgrad W des Katalysators hängt im wesentlichen von der Abgastemperatur, dem Arbeitspunkt der Brennkraftmaschine, die durch die Kraftstoffmenge QK und die Drehzahl N definiert ist, und der Stickoxydemission des Motors ab. Mit der Differenz $\Delta T$ zwischen dem aktuellen Temperaturwert T für den jeweiligen Betriebspunkt und den in dem Kennfeld hinterlegten stationären Wert TS des jeweiligen Betriebspunkts wird der Wirkungsgrad W des Systems aus Kennfeldern ermittelt. Ausgehend von dem Wirkungsgrad W und der Menge MNOX an emittierten Stickoxiden wird Grundmenge MHWL0 für das Reduktionsmittel berechnet. Dieser Wert MHWL0 wird anschließend entsprechend wie in Figur 4 und 5 beschrieben korrigiert.

Diese Ausführungsform ist in Figur 6 detaillierter dargestellt. In einem ersten Schritt 600 wird die Solltemperatur TS bestimmt. Dabei wird die Solltemperatur TS, die bei bestimmten Betriebszuständen stationär vorliegt, ausgehend von der eingespritzten Kraftstoffmenge QK und der Drehzahl der Brennkraftmaschine aus einem Kennfeld ausgelesen. Ausgehend von der mit einem Sensor gemessenen Temperatur T wird die Temperaturdifferenz $\Delta T$ bestimmt.

Im sich anschließenden Schritt 610 wird der Wirkungsgrad des Gesamtsystems bestimmt. Vorzugsweise wird der Wirkungsgrad abhängig von der Temperaturdifferenz $\Delta T$, der einzuspritzenden Kraftstoffmenge QK und/oder der Drehzahl N vorgegeben. Dabei sind mehrere Kennfelder vorgesehen, in denen der Wirkungsgrad W für eine feste Temperaturdifferenz $\Delta T$ in Abhängigkeit der eingespritzten Kraftstoffmenge QK und der Drehzahl N abgelegt sind. In der anschließenden Interpolation 620 wird dann der jeweilige Wirkungsgrad mittels einer Interpolation berechnet.

Im Schritt 630 wird ausgehend von verschiedenen Betriebskenngrößen insbesondere der einzuspritzenden Kraftstoffmenge QK und der Drehzahl N der Brennkraftmaschine die Menge MNOX an Stickoxyden bestimmt. Ausgehend von der Menge MNOX an Stickoxyden und dem Wirkungsgrad W wird dann in Schritt 640 die Menge MHWL0 an Reduktionsmittel bestimmt. In den anschließenden Schritten 530, 430, 440, 450, 460, 470 und 480 erfolgt eine entsprechende Korrektur wie in den voran beschriebenen Figuren.

Bei dieser Ausführungsform wird ausgehend von dem Temperatursignal und wenigstens der Kraftstoffmenge QK ein Signal W vorgegeben wird, das einen Systemwirkungsgrad charakterisiert. Ausgehend von dem Signal W, das den Systemwirkungsgrad charakterisiert, und dem Signal MNOX, das die Menge an zu reduzierenden Stoffen charakterisiert, wird die Grundmenge MHWL0 an zugeführtem Reduktionsmittel vorgegeben. Das Signal, das die Menge an zu reduzierenden Stoffen charakterisiert, wird ausgehend von der eingespritzten Kraftstoffmenge und der Drehzahl der Brennkraftmaschine vorgegeben.

## Patentansprüche

1. Verfahren zur Steuerung einer Brennkraftmaschine (100) mit einem Katalysator (110), bei dem vor dem Katalysator (110) ein Reduktionsmittel zugeführt wird, wobei ein Kraftstoffmengensignal (QK) oder das Moment der Brennkraftmaschine (100) und wenigstens eine weitere Betriebskenngröße (N) der Brennkraftmaschine (110) Eingangsgrößen eines Kennfeldes (400) sind, welches eine Grundmenge (MHWL0) des zuzuführenden Reduktionsmittels bereitstellt, und die Grundmenge (MHWL0) von wenigstens einer weiteren, hinter der Brennkraftmaschine (100) auftretenden Betriebskenngröße (T, SF) korrigiert wird.

2. Verfahren nach Anspruch 1, **dadurch gekennzeichnet, dass** als weitere Betriebskenngröße (N) die Drehzahl der Brennkraftmaschine (100) herangezogen wird.

3. Verfahren nach Anspruch 1, **dadurch gekennzeichnet**, **dadurch gekennzeichnet, dass** als weitere zweite Betriebskenngröße (T) die Abgastemperatur oder die Katalysatortemperatur herangezogen wird.

4. Verfahren nach Anspruch 1, **dadurch gekennzeichnet, dass** als weitere zweite Betriebskenngröße (SF) ein die Alterung des Katalysators (110) und/oder ein Diagnosesignal und/oder ein Toleranz-Korrektursignal (SF) herangezogen wird.

5. Verfahren nach Anspruch 3, **dadurch gekennzeichnet, dass** die Katalysatortemperatur ausgehend von einer ersten Abgastemperatur, welche die Temperatur vor dem Katalysator (110), und einer zweiten Abgastemperatur, welche die Temperatur nach dem Katalysator (110) repräsentiert, ermittelt wird.

## Claims

1. Method for controlling an internal combustion engine (100) having a catalytic converter (110), in which a reducing agent is supplied upstream of the catalytic converter (110), a fuel quantity signal (QK) or the torque of the internal combustion engine (100) and at least one further characteristic operating variable (N) of the internal combustion engine (100) forming input variables for a characteristic diagram (400) which provides a basic quantity (MHWL0) of reducing agent to be supplied, and the basic quantity (MHWL0) is corrected by at least one further characteristic operating variable (T, SF) which occurs downstream of the internal combustion engine (100).

2. Method according to Claim 1, **characterized in that** the further chracteristic operating variable (N) used is the engine speed of the internal combustion engine (100).

3. Method according to Claim 1, **characterized in that** the exhaust-gas temperature or the catalytic converter temperature is used as a further, second characteristic operating variable (T).

4. Method according to Claim 1, **characterized in that** the ageing of the catalytic converter (110) and/or a diagnosis signal and/or a tolerance correction signal (SF) is used as a further, second characteristic operating variable (SF).

5. Method according to Claim 3, **characterized in that** the catalytic converter temperature is determined on the basis of a first exhaust-gas temperature, which represents the temperature upstream of the catalytic converter (110), and a second exhaust-gas temperature, which represents the temperature downstream of the catalytic converter (110).

## Revendications

1. Procédé de commande d'un moteur à combustion interne (100) équipé d'un pot catalytique (110) en amont duquel est amené un agent de réduction, dans lequel
un signal de débit de carburant (QK) ou le couple du moteur (100) est au moins une autre grandeur caractéristique de fonctionnement (N) du moteur (100) sont les grandeurs d'entrée d'un champ de caractéristiques (400) qui prépare un débit de base (MHWLO) de l'agent de réduction à amener et corrige ce débit au moyen d'une autre grandeur caractéristique de fonctionnement (T, SF) se produisant en aval du moteur (100).

2. Procédé selon la revendication 1,
**caractérisé en ce que**
comme autre grandeur caractéristique de fonctionnement (N) on utilise la vitesse de rotation du moteur (100).

3. Procédé selon la revendication 1,
   **caractérisé en ce que**
   comme autre seconde grandeur caractéristique de fonctionnement (T) on utilise la température des gaz d'échappement ou la température du pot catalytique (110).

4. Procédé selon la revendication 1,
   **caractérisé en ce qu'**
   on utilise le vieillissement du pot catalytique (110) et/ou un signal de diagnostic et/ou un signal (SF) de correction de tolérance comme autre seconde grandeur caractéristique de fonctionnement (SF).

5. Procédé selon la revendication 3,
   **caractérisé en ce que**
   la température du pot catalytique (110) est établie en partant d'une première température des gaz d'échappement, qui représente la température en amont du pot catalytique (110), et une seconde température des gaz d'échappement, qui représente la température en aval du pot catalytique (110).

# Fig. 1

# Fig. 2

EP 1 024 254 B1

EP 1 024 254 B1

**Fig. 3**

# Fig. 4

QK ↑

MHWL0 — 400

→ N

↓

K1 = F(T) — 410

↓

425 ⟋ TS → K2 = F(ΔT,N,QK) — 420

↓

K3 = F(t) — 430

↓

K4 = F(Diagnose) — 440

↓

K5 = SF — 450

↓

460 — MWWL
= MHWL0 + K1 + K2 + K3 + K4 + K5

↓

ti, f — 470

↓

Diagnose — 480

# Fig. 5

```
┌──────┐
│  QK  │──────●────────────┐
└──────┘      │            ▼
┌──────┐      │      ┌──────────────────┐
│  N   │──────┼──●──▶│ QK▲       TS      │────── 500
└──────┘      │  │   │  │               │
┌──────┐      │  │   │  └──────────▶ N  │
│  T   │──────┼──┼──▶│                  │
└──────┘      │  │   └──────────────────┘
              │  │            │ ΔT
              │  │            ▼
              │  │   ┌──────────────────┐
              │  └──▶│ QK▲     MHWL0     │────── 510
              │      │ E│               │
              └─────▶│  └──────────▶ N  │
                     └──────────────────┘
                              │
                              ▼
                     ┌──────────────────┐
                     │                  │────── 520
                     └──────────────────┘
                              │
                              ▼
┌──────┐             ┌──────────────────┐
│  TW  │────────────▶│        K2        │────── 530
└──────┘             └──────────────────┘
                              │
                              ▼
                     ┌──────────────────┐
                     │    K3 = F(t)     │────── 430
                     └──────────────────┘
                              │
                              ▼
                     ┌──────────────────┐
                     │  K4 = F(Diagnose)│────── 440
                     └──────────────────┘
                              │
                              ▼
                     ┌──────────────────┐
                     │     K5 = SF      │────── 450
                     └──────────────────┘
                              │
                              ▼
        ┌─────────────────────────────────────────┐
  460 ──│ MWWL                                     │
        │ = MHWL0 + K1 + K2 + K3 + K4 + K5         │
        └─────────────────────────────────────────┘
                              │
                              ▼
                     ┌──────────────────┐
                     │      ti, f       │────── 470
                     └──────────────────┘
                              │
                              ▼
                     ┌──────────────────┐
                     │     Diagnose     │────── 480
                     └──────────────────┘
```

**Fig. 6**

```
┌──────┐
│  QK  │──────●──────┐
└──────┘      │      │    ┌─────────────────────┐
              │      └──▶ │ QK▲                 │
┌──────┐      │           │ │        TS        │──── 600
│  N   │──────●──────────▶│ │                 N │
└──────┘      │           │ └──────────────▶    │
              │           └─────────────────────┘
┌──────┐      │                     │ ΔT
│  T   │──────┼──────────┐          ▼
└──────┘      │          │    ┌─────────────────────┐
              │          └──▶ │ QK▲                 │
              │               │ E      MHWL0        │──── 610
              └──────────────▶│ │                 N │
                              │ └──────────────▶    │
                              └─────────────────────┘
                                        │
                                        ▼
                              ┌─────────────────────┐
                              │                     │──── 620
                              └─────────────────────┘
                                        │
                                        ▼
┌──────────┐                  ┌─────────────────────┐
│          │───────────────▶  │       MHWL0         │──── 640
└──────────┘                  └─────────────────────┘
  630                                   │
                                        ▼
┌──────────┐                  ┌─────────────────────┐
│    TW    │───────────────▶  │        K2           │──── 530
└──────────┘                  └─────────────────────┘
                                        │
                                        ▼
                              ┌─────────────────────┐
                              │    K3 = F(t)         │──── 430
                              └─────────────────────┘
                                        │
                                        ▼
                              ┌─────────────────────┐
                              │  K4 = F(Diagnose)    │──── 440
                              └─────────────────────┘
                                        │
                                        ▼
                              ┌─────────────────────┐
                              │     K5 = SF          │──── 450
                              └─────────────────────┘
                                        │
                                        ▼
        ┌─────────────────────────────────────────────────┐
  460 ──│ MWWL                                             │
        │ = MHWL0 + K1 + K2 + K3 + K4 + K5                 │
        └─────────────────────────────────────────────────┘
                                        │
                                        ▼
                              ┌─────────────────────┐
                              │       ti, f          │──── 470
                              └─────────────────────┘
                                        │
                                        ▼
                              ┌─────────────────────┐
                              │     Diagnose         │──── 480
                              └─────────────────────┘
```

$$MWWL = MHWL0 + K1 + K2 + K3 + K4 + K5$$